# EUROPEAN PATENT SPECIFICATION

(11) **EP 0 831 713 B1**
(45) Date of publication and mention of the grant of the patent: **09.02.2000**
(21) Application number: 96916024.1
(22) Date of filing: 03.05.1996
(51) Int. Cl.: A23D 9/00, A23D 7/00, C11C 3/10, C11C 3/12

(54) **EDIBLE FAT PRODUCT AND INTERESTERIFIED FAT FOR USE THEREIN**
ESSBARES FETTPRODUKT UND DARIN VERWENDETES UMGEESTERTES FETT
PRODUIT GRAS COMESTIBLE ET MATIERE GRASSE INTERESTERIFIEE UTILISEE DANS CE PRODUIT

(30) Priority: 07.06.1995 EP 95201494
(43) Date of publication of application: 01.04.1998
(73) Proprietor: UNILEVER N.V., 3013 AL Rotterdam (NL); UNILEVER PLC, London EC4P 4BQ (GB)
(72) Inventor: HUIZINGA, Hindrik, NL-3146 SH Maassluis (NL); LIVINGSTON, Robert, Middleton, Essex SSO 8LG (GB); ROZENDAAL, Adrianus, NL-3136 BA Vlaardingen (NL)
(74) Representative: Sikken, Antonius H. J. M.
(86) International application number: EP9601911
(87) International publication number: WO9639856

(56) References cited:
- EP-A- 0 076 682
- EP-A- 0 084 900
- EP-A- 0 168 239
- EP-A- 0 470 658
- GB-A- 903 141
- US-A- 5 196 215
- DATABASE WPI Week 9309 Derwent Publications Ltd., London, GB; AN 93-071372 XP002013586 & JP,A,05 017 797 (TSUKISHIMA SHOKUHIN KOGYO KK) , 26 January 1993 cited in the application & PATENT ABSTRACTS OF JAPAN vol. 17, no. 297 (C-1068), 8 June 1993 & JP,A,05 017797 (TSUKISHIMA SHIYOKUHIN KOUGIYOU KK), 26 January 1993,
- DATABASE WPI Week 9040 Derwent Publications Ltd., London, GB; AN 90-302728 XP002013587 & JP,A,02 215 346 (NIPPON OILS & FATS KK) , 28 August 1990 & PATENT ABSTRACTS OF JAPAN vol. 14, no. 513 (C-0777), 9 November 1990 & JP,A,02 215346 (NIPPON OIL & FATS CO LTD), 28 August 1990,

## Description

The present invention relates to edible fat products and to interesterified fat suitable for use in such products.

Edible fat products such as shortenings, margarine and reduced fat products comprise a fat phase the fat of which usually consists of triglyceride fats. In the past decades much work has been done to improve the nutritional properties of such fat products by reducing the fat content and by the choice of fats to improve the fatty acid composition. With respect to the typical western diet nutritionists recommend to reduce fat intake. Especially C₁₂, C₁₄, C₁₆ and fatty acids containing trans unsaturated bonds are held to have an adverse effect on blood cholesterol levels, and their intake should be reduced.

This led to the development of fat products with a minimum of so-called hardstocks and a maximum of liquid oil such as sunflower oil or rapeseed oil. The hardstocks allowing this are usually complicated fats often comprising the use of fats such as coconut and palmkernel fat and involving modification techniques such as chemical or enzymatic interesterification, and dry or wet fractionation.

EP 89 082 discloses a fatblend that comprises 70-96 wt% of liquid oil, e.g. sunflower oil and 4-30 wt% of a hardstock fat in which 55-100 wt% of the triglycerides have a carbon number ranging from 44 to 48. The hardstock can for example be made by randomly interesterifying equal amounts of fully hardened palmkernel fat and fully hardened palm fat, and fractionating the interesterified fatblend twice in acetone.

US 4,425,371 discloses a margarine fatblend that is made by randomly interesterifying a mixture containing 45-75 wt% of an oil having a linoleic acid content of at least 20%, with 55-25 wt% of a fat of which at least 80% of the fatty acids are saturated and have a chain length of at least 16, fractionating the mixture to obtain an olein having a specified N-value profile, and mixing 50-90% of the olein with 50-10% of an oil having a linoleic acid content of at least 40%. As the fat containing at least 80% of saturated acids with chain length of at least 16, hydrogenated vegetable oil e.g. soyabean, sunflower, safflower, rapeseed oil is used.

US 3,425,842 discloses spreads containing as fat 92 - 98% liquid oil and 2-8% hardstock. The hardstock is a combination of "beta-phase tending hardstock" and "non-beta-phase tending" hardstock. As "beta-tending" hardstock for example certain fully hardened fats can be used, substantially fully hardened soyabean oil being preferred. As non-beta tending hardstock for example substantially fully hydrogenated oils having substantial amounts of C₂₀-C₂₄ fatty acids e.g. substantially completely hydrogenated fish oil or mustard oil can be used, substantially completely hydrogenated rapeseed oil being preferred.

EP 470 658 discloses spreads the fat of which contains at least 90% liquid oil e.g. sunflower oil and 2-10% of hardstock. The hardstock comprises typically a single, substantially fully hydrogenated fat, e.g. fully hardened palm oil or fully hardened, optionally randomized fish oil.

As a result of such developments, the products became softer and consequently they were increasingly packed in plastic tubs or even bottles rather than wrappers and more and more of the products required the use of a chilled distribution channel.

Because of the raw materials and modification techniques used, the choice of packaging materials and the use of chilled distribution, the costs are high. Consequently, the improvement of nutritional properties has mainly been confined to premium products.

For many customers these premium products are not affordable. Furthermore, where the improvement has been achieved by substantially reducing the fat content, the product is often only suitable for spreading, not for cooking, baking and frying. Margarines and shortenings that are very soft, often also have a sub optimal performance in kitchen applications, especially in baking.

Relatively little improvement of nutritional properties has been achieved for economy products, and particularly for the harder products, especially those that are mainly used for kitchen application.

It is an object of the present invention to provide fat products of modest cost with improved nutritional properties, particularly with a relatively low content of trans fatty acids.

According to one aspect, the present invention provides an edible fat product comprising a fat phase the fat (A) of which has a content of trans fatty acid residues of at most 10% and which comprises:
(i) interesterified fat (B) derived from a fatblend (C) comprising hydrogenated fish oil with a slip melting point of at least 45°C and liquid oil, and
(ii) optionally other fat (D).

According to another aspect, the invention provides interesterified fat (B) suitable for use in the present fat product, which interesterified fat has a content of trans fatty acid residues of at most 15% preferably 0-10% more preferably 0-5% and which is derived from a fatblend (C) which comprises:
. 20 - 80 % hydrogenated fish oil with a slip melting point of at least 45°C,
. 80 - 10 % liquid oil, and
. optionally up to 40%, preferably 0-30% of fat rich in lauric acid residues.

Throughout this application, all percentages, parts and proportions are by weight, unless otherwise indicated. Preferred embodiments of the present fat product and the interesterified fat are set out in claims 2 - 9, 17 and 11 - 16, respectively.

Fish oil normally is the cheapest oil that can be used in edible fat products. It is extensively used in economy products. To prevent off-flavours, and to give structure to the product, it is usually hydrogenated e.g. to a slip melting point of 35-40°C. The resulting products have high contents of trans fatty acids. The use of this kind of high trans containing hydrogenated fish oil in interesterified components for use in margarine, is known. GB 1 481 694 discloses the use of co-randomised palm oil and marine oil in margarine. The purpose of the interesterification with fish oil is to overcome crystallisation problems related to the use of high amounts of palm oil in fatblends for making margarine.

It is taught that the marine oil should remain a substantially unsaturated oil with a slip melting point of no more than 40°C, particularly from 30 or 32 to 38 or 40°C. J 05 017797 (according to the Derwent abstract) discloses margarine comprising at least 60% of ester-exchanger oil prepared by random ester exchange of 80-50% of a hardened oil with 20-50% of a liquid oil.
The hardened oil has a melting point of 30-42°C.
As hardened oil for example soyabean, cottonseed, palm, maize, rapeseed and fish oil can be used. The hardened oil must contain at least 40% of trans acids. These disclosures are not related to the subject of the present invention, i.e. providing fat products with a desirable fatty acid composition particularly a low content of trans fatty acids, at modest cost. We found that by interesterifying fish oil hydrogenated to a relatively high melting point with liquid oil, fat can be obtained with a very low content of trans fatty acids and with properties that make it suitable for use in the fat for fat products up to quite high levels. Particularly, also the solid contents profile of the interesterified fat as a function of temperature that can be obtained, makes this component attractive. Preferably, the solid fat content of the interesterified fat at 20 and 35°C is preferably N₂₀ at least 15 and N₃₅ at most 25.
More preferably N₂₀ = 18-50, particularly 20-45, most preferably 20-40 and preferably N₃₅ = 0-15, particularly 0-10, most preferably 2-10. Because of the attractive properties of the interesterified fat according to the present invention the content of trans fatty acids and the combined content of C₁₂, C₁₄, C₁₆ and trans fatty acids of the fatproduct can be substantially reduced at only a modest cost increase, without adverse effect on the other properties of the product.

The type or origin of the fish oil is not critical, for example fish oil from herring, pilchard, whale, menhaden etc. can be used. Large volumes of fish oil are for example available from Japan, Chili, USA, Norway etc. Any such oil or blend of such oils can be used as starting material for the present invention.

The optimum amount of hydrogenated fish oil and the optimum degree of hydrogenation to be employed depend on the properties required of the endproduct. Preferably the amount of hydrogenated fish oil is 30 - 75 %, more preferably 30 - 70%, particularly 35 - 60% of the fatblend (C). Preferably, the fish oil has been hydrogenated to a slip melting point of 48-59°C, a slip melting point of 51-59°C being particularly preferred.

The remainder of fatblend (C) preferably consists of liquid oil. By liquid oil is meant oil that is substantially free of solid fat at 20°C, i.e. that has N₂₀ = 0. Preferably the liquid oil has N₁₅ = 0. As liquid oil, suitably liquid vegetable oils such as rapeseed oil, sunflower oil, soyabean oil and the like, and mixtures of such oils can be used. The liquid oil may also include some unhydrogenated fish oil. Usually the amount of such unhydrogenated fish oil should not be high, preferably less than 15% calculated on fatblend (C), more preferably less than 10% to reduce the risk of the development of off-flavours.

Depending on the intended application, fatblend (C) may also include some fat rich in lauric acid residues. Fats rich in lauric acid residues are any fats containing 25% or more, preferably 40-60%, of lauric acid (C₁₂). The use of such fats may be appropriate to achieve desired properties of the endproduct, for example a very steep N-line combining high solids contents at 20°C with low solids contents at 35 or 40°C.

For nutritional reasons however, the use of such fat is preferably avoided. As fat rich in lauric acid, for example hydrogenated or unhydrogenated coconut oil or palmkernel oil can be used. Such fats may also be fractionated and/or interesterified fat. For example, fats rich in lauric acid may be obtained as byproduct of the production of palmkernel stearine to be used as cocoa butter substitute or of the production of hardstock to be used in spreads with a very high content of liquid oil. Such byproducts often are relatively cheap and their use in the present products can help to achieve the desired functional properties at a low cost.

Especially the combined use of fish oil hydrogenated to a relatively high melting point as mentioned above with a content of hydrogenated fish oil of 30 - 75%, more preferably 30 - 70%, especially 35 - 60% in fatblend (C), the remainder of fatblend (C) consisting of liquid oil, allows the production of interesterified fat (B) that has an N-line suitable for application in many fat products, especially harder products primarily intended for kitchen use, at relatively low cost and a relatively low content of C₁₂, C₁₄, C₁₆ and trans fatty acids, and especially of trans fatty acids.

Interesterified fat (B) is derived from fatblend (C) by interesterifying the blend and optionally fractionating it. For cost reasons, fractionation is preferably avoided. However, as is further elucidated below, in some cases it may be advantageous if the interesterified fat (B) has been fractionated. In such cases, the interesterified fat (B) preferably is an olein fraction. The interesterification can be carried out by means of chemical or enzymatic interesterification. The interesterification can be carried out in conventional manner, e.g. as described in G. Hoffmann, The Chemistry and Technology of Edible Oils and Fats and their High Fat Products, Academic Press London, 1989, Chapter 5.III.

The hydrogenation of the fish oil can be carried out by conventional means. Depending on the reaction conditions the hydrogenation can be "high trans" or "low trans". "High trans" hydrogenation gives a relatively steep N-line, but the trans content for a given slip melting point will be relatively high. Such hardening may be appropriate for products requiring steep N-lines. Preferably however, low trans hardening is used. Conditions favouring the formation of relatively small amount of trans fatty acids for a given slip melting point are the use of small amounts of active, non-selective Ni-catalyst, low reaction temperature, fast stirring and high hydrogen pressure. In a preferred embodiment, however, the hydrogenation reaction is continued essentially to completion, i.e. resulting in a hydrogenated fish oil that has very little or no unsaturated fatty acids left and consequently also has a content of trans fatty acids of 0 or close to 0. The slip melting point of such fully hydrogenated fish oil is usually about 55 - 59°C, but depending on the fish oil used, somewhat higher values may be obtained. In practice, fully hydrogenated fish oil will have an iodine value of less than 8, preferably of 0-5. The trans fatty acid residue content is normally less than 3% preferably 0-1.5%. As hydrogenated fish oil, mixtures of individual batches of hydrogenated fish oil may be used. Also, fish oils from different origins may be used. Such fish oils may be blended before or after hydrogenation.

In some cases, e.g. if a steep N-line is desired, i.e. a large difference between N20 and N35 is required for fat (A), while the content of C12, C14, C16 and trans fatty acids should be very low or the relative cost of fat rich in lauric acid residue is high, it can be attractive for the interesterified fat (B) to be a fraction. To prepare such fat (B), after interesterification of fatblend (C), the composition is fractionated and at least one fraction is recovered. Preferably, the fractionation is dry fractionation, but solvent fractionation using a solvent e.g. acetone, or Lanza fractionation, using water and surfactants can be used as well. Conventional fractionation techniques can be employed. The fraction used as fat (B) preferably is an olein fraction, i.e. the fraction resulting from the fractionation having the lower melting point compared with the other fraction on fractions resulting from the fractionation. Preferably, the fractionation is a single stage fractionation that separates the interesterified fatblend (C) into a stearin fraction and an olein fraction, the olein fraction being used as the interesterified fat (B). If fractionation is applied the fatblend (C) preferably consists of 40-80% of the hydrogenated fish oil, 10-60% of the liquid oil and, optionally 0-30% of fat rich in lauric acid residues. More preferably the fatblend (C) consists of 50-75% of the hydrogenated fish oil, the balance consisting of liquid oil. In this embodiment, fat (B) preferably has N20=30-55 and N35=0-10, more preferably N20=35-50 and N35=0-5. Adapting the N values of fat (B) can be arranged by adjusting the composition of fatblend (C) and the fractionation conditions notably the temperature and time of the crystallisation of the interesterified fatblend (C) and of the separation temperature. Normally, the temperature at the end of the crystallisation is the same as the temperature at which the separation is carried out.

This temperature is also referred to as the fractionation temperature.

For dry fractionation, this temperature preferably is between 28-45°C, especially 32-40°C. Recycling of stearin can be applied to recover part of the lower melting triglycerides that remain trapped in the stearin during the fractionation, i.e. the stearin obtained in one fractionation can be mixed with the feed of a subsequent fractionation batch, or the feed can continuously be mixed with the fractionation feedstock in a continuous process. However, when recirculating the stearin, it is advantageous to incorporate the stearin in the fatblend (C) that is to be interestified. Depending on the amount and composition of stearin to be recirculated, the relative amount of hydrogenated fish oil in fatblend (C) can be somewhat reduced and the amount of liquid oil somewhat increased to obtain constant properties and yield of the resulting olein.

Preferably, the fractionation is carried out such that the olein yield is at least 40% of the interesterified blend that is fractionated, more preferably the olein yield is 50-85%. Combinations of one or more of such oleins and not-fractionated interesterified fat can of course also be used as interesterified fat (B).

Thus overall, interesterified fat (B) preferably is derived from fatblend (C) by interesterifying it, optionally fractionating fatblend (C) or a combination of fatblend (C) with a stearin fraction by-product from an earlier production of interesterified fat (B), to recover an olein fraction and using as interesterified fat (B), the interesterified fatblend (C), the olein or a combination thereof wherein fatblend (C) consists of:
* 20-80% hydrogenated fish oil with a slip melting point of at least 45°C
* 80-10% liquid oil
* optionally up to 40%, preferably 0-30% of fat rich in lauric acid residues, and
* optionally up to 70% preferably 0-60% especially 0-50% of a stearin fraction from an earlier production of interesterified fat (B) .

The fat phase of the edible fat product may consist of the fat (A) as such, but mostly it will contain in addition some additives like colour, flavour, emulsifier and the like. Typically the fat (A) constitutes at least 95% of the fat phase, mostly more than 98 or 99% of the fat phase. The fat product may consist of the fat phase as such, e.g. if the fat product is a fat for frying or a shortening, e.g. for cooking, baking and shallow frying applications. The fat product may also comprise an aqueous phase. For example, the fat product may be a margarine or a reduced fat product comprising a continuous fat phase and a dispersed aqueous phase. Accordingly, the fat product preferably comprises 30 - 100% of fat phase and optionally up to 70% of dispersed aqueous phase. The present invention is however particularly advantageous for products with relatively high fat contents, and products for kitchen application for which quite high fat contents are desired. Accordingly the fat phase more preferably constitutes 40 - 100%, especially 60 - 100% of the product, the fat phase constituting the continuous phase of the product. Margarine and shortening, containing 80 - 85% and 100% fat phase, respectively are particularly preferred. The remainder of the product, if any, preferably consists of dispersed aqueous phase.

The product may be a relatively soft product to be packed in a tub. The invention is however especially advantageous for harder products which can be packed in a wrapper. Accordingly, the N₂₀ of the fat (A) preferably is at least 8, more preferably 11 - 50, 15 - 40 being especially preferred. The products with the higher N₂₀ values are especially suitable for baking applications like pastries. For cake and cream making intermediate N₂₀ values are appropriate while the lower N₂₀ values give products especially suitable for spreading. For cooking and frying applications the N₂₀ value is not very critical.
The combined content of C₁₂, C₁₄, C₁₆ and trans fatty acids and especially of trans fatty acids as such, typically occurring in fat products depends to a degree on the N₂₀ value. Usually these contents are higher for products with intermediate N-values, somewhat lower values being obtainable for products with very low or very high N₂₀ values. The present invention allows reduction of these contents for products across the whole N₂₀ range but important improvements can especially be achieved for the intermediate N₂₀ values, e.g. in the N₂₀ range of 20 - 40. The fat product is preferably formulated such that the combined content of C₁₂, C₁₄, C₁₆ and trans fatty acids is less than 50%, more preferably less than 40% of fat (A). The content of trans fatty acid residues alone in fat (A) is at most 10%, preferably however, it is less than 7%, 0-5% being particularly preferred.

The fat (A) of the fat product may consist solely of interesterified fat (B) but optionally fat (A) may also comprise other fat (D). As other fat (D), any fat normally used in fat products may be used. Depending on availability and price and on the desired properties of the end product, such fats can be hardened or unhardened vegetable or animal fat or oil, byproducts of fractionation processes, interesterified fats, etc., provided that the trans acid content of fat (A) does not exceed 10%.
The amount of such other fat (D) in fat (A) may be as high as 80% or more, especially if relatively soft products are to be made, but preferably the amount of fat (D) is 0 - 60%, 0 - 40% being particularly preferred.

Particularly suitable fats to be used as fat (D) are liquid oil, partially hydrogenated fish oil, fat rich in lauric acid residues and mixtures of two or more thereof. Palm oil and palm oil fractions can also be used in or as fat (D). As liquid oil and as fat rich in lauric acid residues the same oils and fats can be used as described above for use in fatblend (C). For example, the use of liquid oil as fat (D) is often appropriate for softer products. For example, if an interesterified fat (B) is designed to be suitable as such for use as fat in a fat product to be packed in a wrapper, the same interesterified fat (B) can often suitably be used for making a tub product by using 60 - 90 % of the interesterified fat (B) mixed with 10 - 40% of liquid oil as fat (D). The use of partially hydrogenated fish oil in or as fat (D) can be attractive e.g. for cost reasons, while the use of fat rich in lauric acid residues may be appropriate to achieve a very steep N-line, if required, e.g. to reduce the N₃₅ value without substantially reducing N₁₀. However, the combined use of partially hydrogenated fish oil and of fat rich in lauric acid residues in or as fat (D) is preferably kept low for nutritional reasons.
Preferably their combined use is less than 30%, more preferably less than 20% calculated on the total amount of fat (A). To obtain minimal or zero levels of trans fatty acids, however, it is most preferred to avoid the use of partially hydrogenated fat altogether.

Apart from providing improved nutritional properties at a modest cost, it is an advantage of the present invention that with the use of interesterified fat (B), the manufacturing of the fat products becomes relatively easy. Depending on the fat used, in the production of fat products problems can easily arise, for example the fat may crystallize slowly giving problems to pack the product in wrappers and leading to high rejects, or defects may develop in the product such as sandiness, lumpiness or graininess. With the use of interesterified fat (B) in fat (A), the window of operating conditions is relatively wide, and product defects are less likely to develop.

If the fatproduct comprises an aqueous phase it may comprise apart from water, other ingredients e.g. milk or ingredients derived from milk, preservative, flavour, gelling or thickening agents etc.

Throughout this application Nₓ indicates the solid fat content measured at X°C by means of NMR as described in Fete, Seifen, Anstrichmittel 80, 180-186 (1978) using 1 hour stabilisation at 60°C, 1 hour stabilisation at 0°C and 30 minutes stabilisation at the measuring temperature.

Slip melting point is measured as described in The Lipid Handbook, F.D. Gunstone et al., Chapman and Hall, (1986), pp. 251-253.

Fatty acid compositions including trans fatty acids can be measured by means of GLC. See e.g. JAOCS 54, (1977), 208. Contents of fatty acid residues are expressed relative to the weight of the combined amount of fatty acid residues, i.e. excluding the weight contribution of the glycerol moieties of the fat.

### EXAMPLES

### Examples 1-8

Fish oil was essentially fully hydrogenated. It had a slip melting point of 55°C and an I.V. of 6.5. It was randomly interesterified using a chemical catalyst with rapeseed oil in weight ratio's of 40:60, 50:50 and 60:40. The N-values of the interesterified fats are given in Table I. These interesterified fats were mixed with rapeseed oil at 60°C in ratios as shown in table II. The N-lines of these mixtures are also given. The trans fatty acid contents of all fats were between 1 and 3%.

**Table I**

| Example | 1 | 2 | 3 |
|---|---|---|---|
| Interesterified blend | | | |
| Hardened fish oil (%) | 40 | 50 | 60 |
| Rapeseed oil (%) | 60 | 50 | 40 |
| | | | |
| N₁₀ | 36.4 | 49.9 | 64.8 |
| N₂₀ | 21.2 | 36.2 | 53.5 |
| N₃₀ | 7.9 | 18.8 | 32.8 |
| N₃₅ | 4.4 | 11.5 | 22.3 |
| | | | |
| C₁₂+C₁₄+C₁₆ (%) | 17.5 | 20.8 | 24.1 |

**Table II**

| Example | 4 | 5 | 6 | 7 | 8 |
|---|---|---|---|---|---|
| Interesterified | | | | | |
| fat from example | 1. | 1. | 2. | 2. | 3. |
| Amount of | | | | | |
| interesterified fat (%) | 88 | 70 | 70 | 50 | 50 |
| Rapeseed oil (%) | 12 | 30 | 30 | 50 | 50 |
| | | | | | |
| N₁₀ | 30.7 | 23.1 | 30.4 | 21.7 | 31.0 |
| N₂₀ | 17.5 | 12.6 | 20.5 | 13.3 | 21.8 |
| N₃₀ | 7.0 | 4.5 | 9.7 | 6.7 | 12.1 |
| N₃₅ | 3.8 | 2.3 | 6.9 | 3.2 | 8.6 |
| | | | | | |
| C₁₂+C₁₄+C₁₆ (%) | 15.9 | 13.6 | 15.9 | 12.6 | 14.2 |

Fat phases are prepared from each of the fats of examples 1 and 4-8 by mixing 100 parts of fat with 0.2 parts of monodiglyceride and 0.1 part of soyabean lecithin. A small amount of β-carotene colourant is included. Aqueous phase is prepared by mixing 70 parts water with 30 parts acidified milk. Citric acid solution is added to adjust the pH to 4.6 and small amounts of flavour and preservatives are included. Margarines are prepared in a conventional way using 82 parts of fat phase and 18 parts of aqueous phase. The products obtained with the fats of examples 5 and 7 are filled in tubs. They are primarily suitable for spreading. The products from fats 1, 4, 6 and 8 are packed in wrappers. Product 4 is a soft wrapper product especially suitable for spreading. The product from fat 1 is a multipurpose product. The products from fats 6 and 8 are primarily intended for kitchen application, e.g. cooking, baking and shallow frying.

### Examples 9-10

Fish oil was hydrogenated under conventional conditions to a slip melting point of 47°C. This partially hydrogenated fish oil had an iodine value of 32, and a trans fatty acid residue content of 25%. This fish oil was interesterified with sunflower oil using a chemical catalyst. The results are given in Table III.

**Table III**

| Example | 9 | 10 |
|---|---|---|
| Interesterified blend hydr. fish oil (47°C) (%) | 50 | 60 |
| sunflower oil (%) | 50 | 40 |
| | | |
| N₁₀ | 44 | 54 |
| N₂₀ | 24 | 34 |
| N₃₀ | 9 | 16 |
| N₃₅ | 4 | 8 |
| | | |
| Trans (%) | 13 | 15 |

By blending 70 parts of the interesterified fat of example 9 with 30 parts of rapeseed oil a fat is obtained with 9% trans fatty acids suitable for preparing for example a tub margarine. Similarly, tub margarines of different hardnesses and having trans fatty acid contents of less than 10% can be prepared from fat 10 by mixing 50-65% of this fat with 50-35% of liquid oil such as sunflower oil, rapeseed oil, soyabean oil or a mixture thereof.

### Examples 11-21

Fish oil was hydrogenated to a slip melting point of 53°C. It had an I.V. of 16.8 and a trans fatty acid residue content of 11%. This fish oil was randomly interesterified with different amounts of rapeseed oil and in some cases coconut oil. The composition of the blends that were interesterified and the N-values and the trans contents of the resulting interesterified fats are given in table IV.

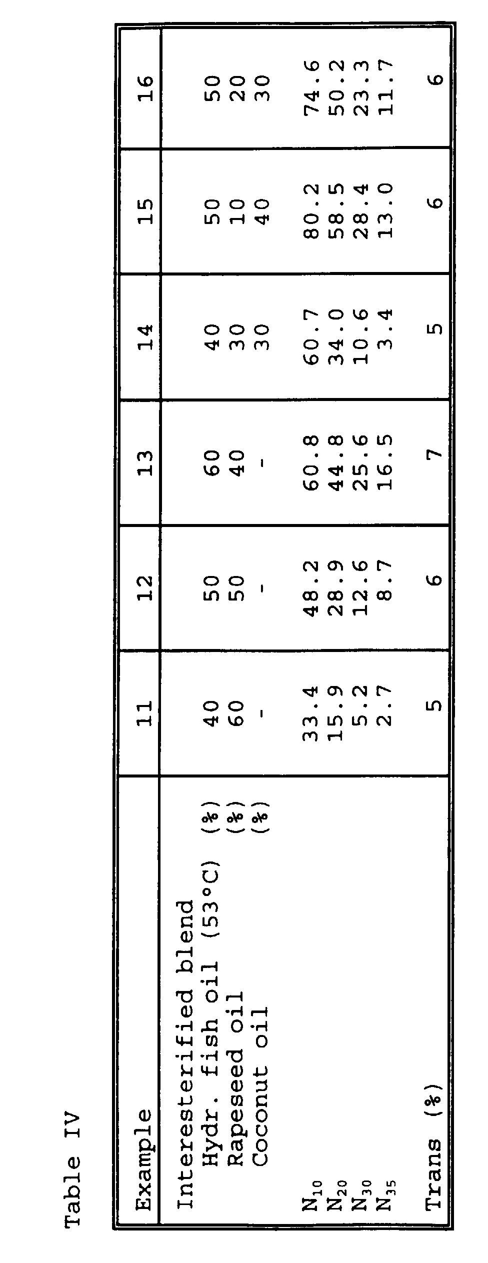

The fat of example 11 is suitable as such as the fat in fairly firm tub margarines. It can also be used for preparing spreads with reduced fat content, e.g. 40% fat phase and 60% aqueous phase. The fat of example 14 is very suitable for making a firm wrapper product e.g. for kitchen applications, that needs to be distributed at ambient conditions in warm climates. It is also suitable for preparing shortening. Mixtures of 50% of the fats 12-16 were made with 25% rapeseed oil and 25% sunflower oil. The results are shown in table V.

**Table V**

| Example | 17 | 18 | 19 | 20 | 21 |
|---|---|---|---|---|---|
| Interesterified fat from example | 12 | 13 | 14 | 15 | 16 |
| | | | | | |
| N₁₀ | 18.3 | 24.7 | 23.1 | 33.7 | 28.2 |
| N₂₀ | 9.2 | 14.8 | 9.6 | 20.1 | 16.8 |
| N₃₀ | 4.7 | 8.6 | 2.7 | 8.1 | 6.6 |
| N₃₅ | 1.6 | 4.7 | 0.5 | 2.1 | 1.9 |
| | | | | | |
| Trans (%) | 3 | 3 | 2 | 3 | 3 |
| Suitable as fat for preparation of (margarine) | soft tub | tub | soft tub | wrapper | firm tub |

Especially the fat of example 19 will give a fat product with good mouthfeel and good flavour release. Similar types of product can also be prepared using for example in each case 70% of fat phase and 30% of aqueous phase.

### Examples 22-25

Fish oil was hydrogenated to a slip melting point of 37°C. It had a trans fatty acid content of 48%. When 40 parts of the fish oil hydrogenated to a slip melting point of 53°C of examples 11-21 was mixed with 10 parts of the fish oil hydrogenated to 37°C, the slip melting point of the mixture was still above 45°C. The same applies of course when mixing these components in a ratio of 45:5.
The blends as given in Table VI were interesterified.

**Table VI**

| Example | 22 | 23 |
|---|---|---|
| hydr. fish oil (53°C) | 45 | 40 |
| hydr. fish oil (37°C) | 5 | 10 |
| rapeseed oil | 50 | 50 |
| | | |
| Interesterified fat: | | |
| N₁₀ | 45.7 | 43.6 |
| N₂₀ | 26.6 | 23.8 |
| N₃₀ | 11.6 | 10.3 |
| N₃₅ | 7.9 | 5.5 |
| | | |
| Trans (%) | 7.5 | 9.4 |

Fat 23 can be used as such as the fat for making e.g. kitchen margarine or shortening.

These fats were mixed in a 1:1 weight ratio with rapeseed oil. The following results were obtained.

**Table VII**

| Example | 24 | 25 |
|---|---|---|
| Int. est. fat from example | 22 | 23 |
| | | |
| N₁₀ | 16.9 | 20.0 |
| N₂₀ | 8.4 | 9.7 |
| N₃₀ | 3.7 | 4.4 |
| N₃₅ | 1.3 | 1.6 |
| | | |
| Trans (%) | 3.8 | 4.6 |

Both blends can be used for making soft tub spreads.

### Examples 26-29

Fish oil was hydrogenated under conventional conditions to different melting points. Similarly, a number of hydrogenated fish oils with different slip melting points were produced using LT (low trans) hydrogenation conditions, meaning that more fresh catalyst was used, but the amount of catalyst was less, the reaction temperature was somewhat lower and the hydrogen pressure was higher.

Each of these fish oils was interesterified in a 1:1 weight ratio with rapeseed oil. The properties of the fish oils and of the interesterified fats are given in table VIII. For comparison also the results obtained with a fish oil hydrogenated to a slip melting point of less than 45°C is shown. Also shown for comparison are the results obtained when one of the hydrogenated fish oils is just blended with rapeseed oil, without interesterification.

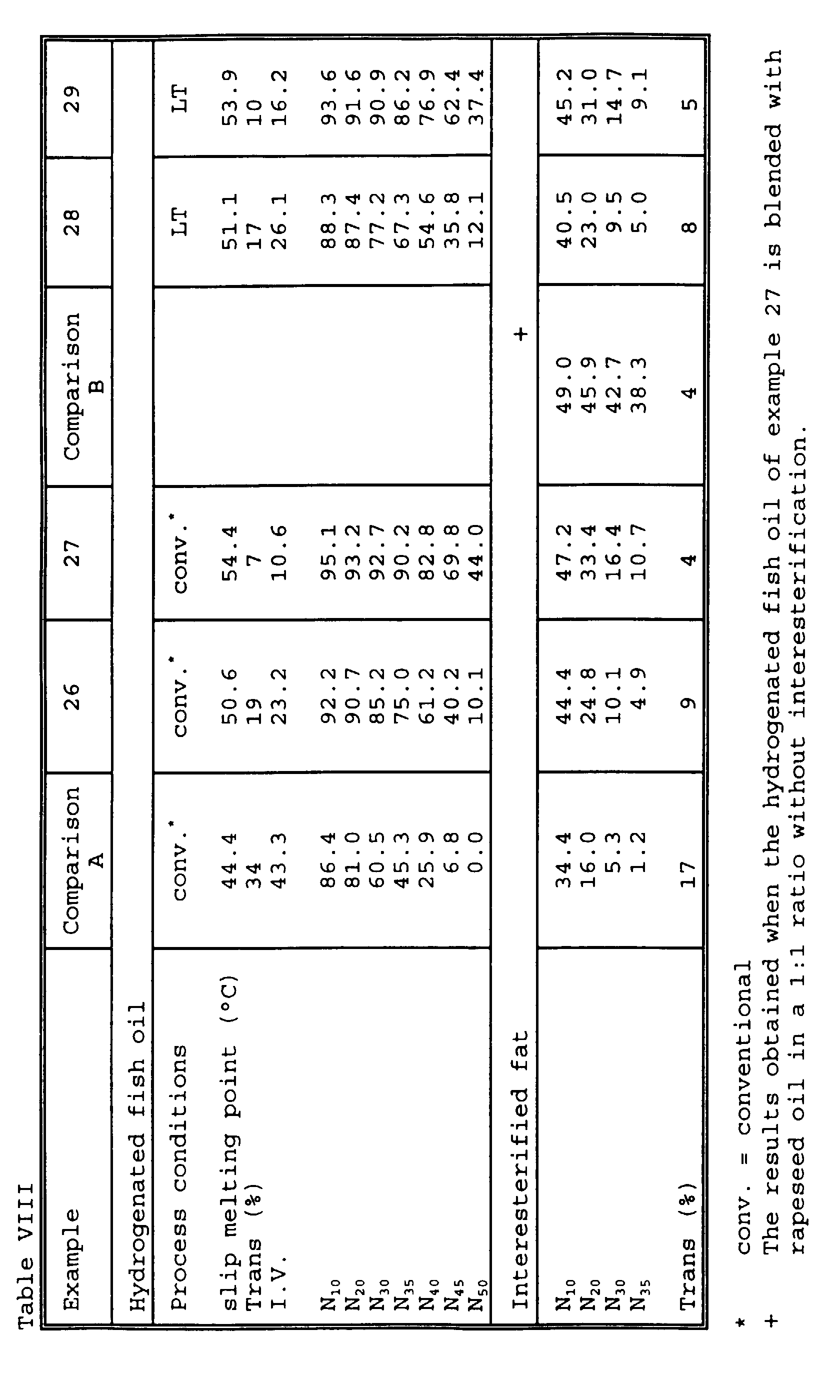

Fats 26 and 28, as such, are suitable for use as fat in the preparation of for example wrapper margarines or shortenings. The fat of comparison A, made with hydrogenated fish oil with a too low melting point, can be used for making a tub margarine, but the product will have a trans content of 17% calculated on the weight of the fat. If the fat is diluted with liquid oil to reduce the trans content too well below 10, the resulting fat blend is slightly too soft, and suitable fat products can no longer be prepared from it. Comparison B shows that the interesterification is essential. If the same fat mixture is used as in Example 27 but without interesterification, the fat has a very "flat" N-line: N₂₀ and N₁₀ are only a little higher than N₃₀ and N₃₅. From such fat no acceptable plastic fat product can be prepared. The amount of solid fat at body temperature will be much too high.

### Examples 30-32

Fats are prepared using the interesterified fats of examples 27 and 29 and blending them with other fats as given in table IX. The resulting N-lines and trans fatty acid contents are given as well.

**Table IX**

| Example | 30 | 31 | 32 |
|---|---|---|---|
| Fat of ex. 27 | 19 | 76 | 25 |
| Fat of ex. 29 | 67 | - | 57 |
| soyabean oil | 4 | 11 | - |
| palmkernel oil | 10 | - | - |
| fish oil hydr. to 49°C | - | 13 | - |
| component X* | - | - | 18 |
| | | | |
| N₁₀ | 44 | 48 | 47 |
| N₂₀ | 25 | 34 | 29 |
| N₃₀ | 8 | 16 | 10 |
| N₃₅ | 3 8 4 | | |
| | | | |
| saturated fatty acids (%) | 49 | 48 | 52 |
| trans (%) | 4 | 5 | 4 |
| cis-unsaturated | 47 | 47 | 44 |
| cis-polyunsaturated | 5 | 19 | 5 |

| | | | |
|---|---|---|---|
| * Component X is an interesterified blend of 40 parts palm oil and 60 parts palmkernel oil. | | | |

From fats 30 and 32 wrapper margarines are prepared in the same manner as described for example 1. In a similar way from the fat 31 a wrapper shortening is prepared, except that 100% fatphase is employed and no aqueous phase.

### Example 33

Fish oil was hydrogenated to a slip melting point of 50°C. A blend of this hardened fish oil with rapeseed oil in a 1:1 weight ratio was randomly interesterified. A fatblend was prepared of 93 parts of this component and 7 parts rapeseed oil and the mixture was refined in a conventional manner. A fat phase was prepared by adding to 80 parts of fatblend, 0.1 parts lecithin, 0.1 parts of a monodiglyceride mixture and small amounts of β-carotene solution and flavour. An aqueous phase was prepared comprising water and small amounts of citric acid, flavour and salt. Margarine was prepared by continuously passing 82 parts fat phase and 18 parts aqueous phase by means of a proportioning pump through a margarine production line comprising a CAB sequence wherein C indicates a stirred crystallizer, A are scraped surface heat exchangers and B indicates an (unstirred) resting tube. Part of the stream exiting from the 3rd A-unit was recirculated and mixed with fresh feed before the entrance of the C-unit. The line was operated at a throughput of 3.7 tons/hour. The fresh feed had a temperature of 40°C and the product leaving the B-unit had a temperature of 9°C. The product was packed in wrappers and stored at 15°C.

The solid fat contents (N-values) were:

| | |
|---|---|
| N₁₀ | 47.9 |
| N₂₀ | 26.6 |
| N₃₀ | 10.8 |
| N₃₅ | 5.1 |
| N₄₀ | 0 |

The firmness of the product at 5°C was assessed with a Stevens Texture Analyzer® in conventional manner using a 2 mm cylindrical rod. The resulting S5 value was 175 g. The refined fatblend had a content of trans fatty acid residues of 9.7%. The resulting product was a good multi purpose margarine suitable for cooking and baking as well as for spreading on bread.

### Example 34

Example 33 was repeated except that the following fatblend was used
48% of the interesterified component of example 33
17% of dry fractionated palm stearine fraction
22% of palm oil
13% of rapeseed oil

The following results were obtained

| | |
|---|---|
| N₁₀ | 40.4 |
| N₂₀ | 23.0 |
| N₃₀ | 10.9 |
| N₃₅ | 5.2 |
| N₄₀ | 0 |
| Trans | 5% |
| S5 (2 mm ø): 202 | |

### Example 35

A tub margarine was prepared in the same manner as described in example 33 except that:
* as fatblend was used a mixture of
   62% of the interesterified component of example 33
   12% fish oil hydrogenated to a slip melting point of 35°C
   26% rapeseed oil
* the production line had only 3 A-units, recirculation was taken from after the 2nd A-unit and the line had a C-unit instead of a B-unit.
* the line was operated at a througput of 8 tons/hour.
* the temperature of the product leaving the last C-unit was 14°C.
* the product was filled into tubs.

The following results were obtained

| | |
|---|---|
| N₁₀ | 32.2 |
| N₂₀ | 15.6 |
| N₃₀ | 5.7 |
| N₃₅ | 1.4 |
| Trans | 10% |
| S5 (measured with 6.3 mm ø rod): 365 g. | |

The product was a good tubmargarine suitable e.g. for cooking as well as for spreading on bread or toast.

### Examples 36-43

Fish oil was fully hydrogenated using a conventional nickel catalyst. The hydrogenated oil had a slip melting point of 57°C. Its fatty acid composition was:

| | |
|---|---|
| C14:0 | 7% |
| C15:0 | 1% |
| C16:0 | 30% |
| C17:0 | 1% |
| C18:0 | 23% |
| C20:0 | 19% |
| C22:0 | 11% |
| C24:0 | 1% |
| Others | 7% |

70 Parts of this fully hydrogenated fish oil was combined with 30 parts low erucic acid rapeseed oil. The blend was randomly interesterified using sodium methylate as chemical catalyst, in a conventional manner. The interesterified composition was heated to 70°C and then cooled to 55°C at a rate of 0.8°C/min., kept at 55°C for 20 minutes and cooled to 38°C at a rate of 0.05°C/min. It was then kept at this temperature until the amount of crystallized fat no longer increased, and subsequently the phases were separated at 38°C under increasing pressure of up to 12 bar. The olein fraction was refined in conventional manner and blended with refined other fats (D) as given in Table X to provide a series of fats (A). All fats had a content of trans unsaturated fatty acid residues of 2% or less. The N-values of the fats (A) are also given in Table X.

**Table X**

| Example | 36 | 37 | 38 | 39 | 40 | 41 | 42 | 43 |
|---|---|---|---|---|---|---|---|---|
| Composition (%) | | | | | | | | |
| Olein | 100 | 42.9 | 57.1 | 71.7 | 28.6 | 35.7 | 42.8 | 50.0 |
| Palmstearine* | - | 6.5 | 7.1 | 1.3 | 3.6 | 2.3 | 1.1 | - |
| Palm oil | - | 27.5 | 8.9 | - | 22.0 | 13.8 | 5.8 | - |
| Soybean oil | - | 23.1 | 26.9 | 26.9 | 45.8 | 48.1 | 50.3 | 50.0 |
| N-values | | | | | | | | |
| N10 | 60.4 | 37.3 | 37.2 | 44.3 | 23.4 | 20.7 | 19.6 | 20.9 |
| N20 | 40.5 | 19.3 | 19.2 | 19.5 | 11.0 | 9.0 | 9.0 | 9.2 |
| N30 | 10.9 | 7.1 | 6.6 | 4.8 | 3.4 | 1.8 | 1.3 | 1.1 |
| N35 | 1.2 | 1.8 | 1.0 | 0.0 | 0.2 | 0.0 | 0.0 | 0.1 |

| | | | | | | | | |
|---|---|---|---|---|---|---|---|---|
| * The palm stearine had been obtained from dry fractionation of palm oil. Its slip melting point was 52°C. | | | | | | | | |

The fat of Ex. 36 can suitably be used for preparing baking shortening or margarine. The fats of ex. 37-39 are suitable for the preparation of wrapper margarines or similar products with lower fat contents, e.g. 60 or 70%, e.g. for use as table spread instead of butter. The fats of ex. 40-43 can be used for making e.g. tubmargarines or reduced fatspreads, e.g. containing 35 or 40% fat.

Comparison of Ex.36 with e.g. examples 1-3 illustrates that the use of an olein fraction allows obtaining a steep interesterified fat (B) that combines a low N35 value with a fairly high N20 value, without using lauric fat or partially hydrogenated fat.

### Example 44

An interesterified fat was prepared as described in example 36 except that the fatblend that was interesterified comprised 60 parts hydrogenated fish oil and 40 parts of rapeseed oil (canola) and that the fractionation temperature was 40°C or 32°C. The oleins obtained had the following N-values:

| Fractionation Temp | 32°C | 40°C |
|---|---|---|
| N10 | 42.1 | 49.9 |
| N20 | 20.2 | 30.7 |
| N30 | 0.4 | 11.2 |

### Example 45

Fish oil was essentially fully hydrogenated. It had a slip melting point of 57°C. 40 Parts of this oil was blended with 60 parts low erucic acid rapeseed oil and the blend was interesterified in conventional manner using a chemical catalyst. 71.1 Parts of this interesterified fat was blended with 9.3 parts palm oil and 19.6 parts rapeseed oil to provide fat (A).

For comparison, 80 parts of fish oil hydrogenated to a slip melting point of 33°C and 20 parts rapeseed oil were blended to provide a conventional, cheap margarine fatblend with a high trans unsaturated fatty acid content.

The N-values of the fatblends were

| | Ex. 45 | Reference |
|---|---|---|
| N10 | 33.0 | 35.0 |
| N20 | 13.8 | 16.9 |
| N30 | 4.8 | 3.2 |
| N35 | 2.9 | 0 |

Fat phase and aqueous phase compositions were prepared as follows:

| | |
|---|---|
| 81.32 | parts fatblend |
| 0.05 | parts monoglyceride |
| 0.05 | parts lecithin |
| 0.08 | parts colourant |
| 15.75 | parts water |
| 2.25 | parts salt |
| 0.5 | parts sweet whey powder |
| p.m. | citric acid to pH 5.5 |

The fatphase and aqueous phase compositions were mixed and kept at 60°C. For the reference composition conventional spread processing conditions were applied using an CAAAC sequence with recirculation from after the second A-unit into the first C-unit.

For the composition according to the invention, an AAAC sequence was applied. The throughput was 70 kg/h, the temperature after the third A-unit was 8°C and the volume of the C-unit was 3 liter. The A-units were operated at 600 rpm, the C-unit at 300 rpm.

The products were filled in tubs and stored at 5°C. After 9 weeks storage the Stevens value of the products at 10°C using a 6.35 mm probe were 274 and 276 g for the reference and the trial product, respectively. Panel evaluation as well as oil exudation tests confirmed that the trial product was a fully satisfactory match of the reference product.

The trial product contained only about 2% trans fatty acid residues. The trans content of the reference product was 32% calculated on the fatty acid residue content of the fat.

Although the trial fat contained only 28% fish oil while the reference fat contained 80%, the trial fat was only moderately more expensive because of the reduction in the amount of fish oil that needed to be hydrogenated. Hydrogenation of fish oil is relatively expensive.

### Example 46

Similarly as described in example 45, a conventional wrapper margarine based on partially hydrogenated fish oil and having a trans content in the fat of 48% could be matched by a product containing a fat with only about 2% trans having the following composition:
69.3% of the interesterified fat of example 45
10.8% dry fractionated palm oil stearin
19.9% palm oil.

The N-values of the fatblend were:

| | |
|---|---|
| N10 | 38.0 |
| N20 | 23.7 |
| N30 | 11.3 |
| N35 | 6.0 |

The Votator sequence applied was ACAB. The temperature after each of the units was 14, 17, 11 and 15°C, respectively.

The Stevens values (4.4 mm probe) at 10 and 20°C were:

| | Ex. 46 | Reference |
|---|---|---|
| St10 | 325 | 374 |
| St20 | 161 | 146 |

Also in this case, overall evaluation of physical and sensoric properties showed that the trial product was an acceptable match of the reference product.

## Claims

1. Edible fat product comprising a fat phase the fat (A) of which has a content of trans fatty acid residues of at most 10% and which comprises
- interesterified fat (B) derived from a fatblend (C) comprising hydrogenated fish oil with a slip melting point of at least 45°C and liquid oil, and
- optionally other fat (D).

2. Fat product according to claim 1 wherein the fat (A) comprises 20 - 100% of interesterified fat (B) and 0 - 80% of other fat (D).

3. Fat product according to claim 2 wherein the fat (A) comprises 40 - 100% of interesterified fat (B) and 0 - 60% of other fat (D), preferably 60 - 100% of interesterified fat (B) and 0 - 40% of other fat (D).

4. Fat product according to any one of claims 1 - 3 comprising 30 - 100% of fat phase and optionally up to 70% of dispersed aqueous phase.

5. Fat product according to claim 4 comprising 40 - 100% of fat phase and 0 - 60% of aqueous phase, preferably 60 - 100% of fat phase and 0 - 40% of aqueous phase.

6. Fat product according to any one of claims 1 - 5 wherein the other fat (D) consists of liquid oil, partially hydrogenated fish oil, fat rich in lauric acid residues, palm oil, a palm oil fraction or a mixture of two or more thereof.

7. Fat product according to any one of claims 1 - 6 wherein the content of C₁₂, C₁₄, C₁₆ and trans fatty acid residues is less than 50%, preferably less than 40% of the fat (A).

8. Fat product according to any one of claims 1 - 7 wherein the content of trans fatty acids residues is less than 7% of the fat (A).

9. Fat product according to any one of claims 1 - 8 wherein the fat (A) has an N₂₀ of at least 8, preferably of 11 - 50, more preferably of 15 - 40.

10. Interesterified fat (B) suitable for use in a fat product according to any one of claims 1 - 9, which has a content of trans fatty acid residues of at most 15% preferably 0-10%, more preferably 0-5% and which is derived from a fatblend (C) comprising 20 - 80% hydrogenated fish oil with a slip melting point of at least 45°C, 80 - 10% of liquid oil and optionally up to 40%, preferably 0-30% of fat rich in lauric acid residues.

11. Interesterified fat (B) according to claim 10, wherein fatblend (C) consists of 30 - 75% hydrogenated fish oil and 70 - 25% of liquid oil, preferably 30 - 70% hydrogenated fish oil and 70 - 30% of liquid oil.

12. Interesterified fat (B) according to claim 10 or 11 that is not fractionated.

13. Interesterified fat (B) according to claim 10 or 11 that is or comprises an olein fraction.

14. Interesterified fat (B) according to any one of claims 10 - 13 wherein the hydrogenated fish oil has a slip melting point of 48 - 59°C, more preferably of 51 - 59°C.

15. Interesterified fat (B) according to any one of claims 10-14, wherein the hydrogenated fish oil is essentially fully hydrogenated fish oil.

16. Interesterified fat (B) according to any one of claims 10-15 having a N₂₀ of 18-50 and a N₃₅ of 0-15.

17. Fatproduct according to any one of claims 1-9 wherein the interesterified fat (B) is a fat (B) according to anyone of claims 10-16.

## Patentansprüche

1. Eßbares Fettprodukt, umfassend eine Fettphase, deren Fett (A) einen Gehalt an Trans-Fettsäureresten von höchstens 10% aufweist und umfaßt:
- umgeestertes Fett (B), abgeleitet aus einem Fettgemisch (C), umfassend hydriertes Fischöl mit einem Steigschmelzpunkt von mindestens 45°C und flüssiges Öl, und
- fakultativ ein anderes Fett (D).

2. Fettprodukt nach Anspruch 1, worin das Fett (A) umfaßt: 20-100% umgeestertes Fett (B) und 0-80% des anderen Fettes (D).

3. Fettprodukt nach Anspruch 2, worin das Fett (A) umfaßt: 40-100% umgeestertes Fett (B) und 0-60% des anderen Fettes (D), vorzugsweise 60-100% umgeestertes Fett (B) und 0-40% des anderen Fettes (D) .

4. Fettprodukt nach irgendeinem der Ansprüche 1 bis 3, umfassend 30-100% Fettphase und fakultativ bis zu 70% dispergierte wäßrige Phase.

5. Fettprodukt nach Anspruch 4, umfassend 40-100% Fettphase und 0-60% wäßrige Phase, vorzugsweise 60-100% Fettphase und 0-40% wäßrige Phase.

6. Fettprodukt nach irgendeinem der Ansprüche 1 bis 5, worin das andere Fett (D) aus flüssigem Öl, partiell hydriertem Fischöl, an Laurinsäureresten reichem Fett, Palmöl, einer Palmölfraktion oder einer Mischung aus zwei oder mehreren davon besteht.

7. Fettprodukt nach irgendeinem der Ansprüche 1 bis 6, worin der Gehalt an C₁₂-, C₁₄-, C₁₆- und Trans-Fettsäureresten weniger als 50%, vorzugsweise weniger als 40%, des Fettes (A) beträgt.

8. Fettprodukte nach irgendeinem der Ansprüche 1 bis 7, worin der Gehalt an Trans-Fettsäureresten weniger als 7% des Fettes (A) beträgt.

9. Fettprodukt nach irgendeinem der Ansprüche 1 bis 8, worin das Fett (A) einen N₂₀ von mindestens 8, vorzugsweise 11-50, insbesondere 15-40, aufweist.

10. Umgeestertes Fett (B), das zur Verwendung in einem Fettprodukt nach irgendeinem der Ansprüche 1 bis 9 geeignet ist, welches einen Gehalt an Trans-Fettsäureresten von höchstens 15%, vorzugsweise 0-10%, insbesondere 0-5%, aufweist und das von einem Fettgemisch (C) abgeleitet ist, das 20-80% hydriertes Fischöl mit einem Steigschmelzpunkt von mindestens 45°C, 80-10% flüssiges Öl und fakultativ bis zu 40%, vorzugsweise 0-30%, eines an Laurinsäureresten reichen Fettes umfaßt.

11. Umgeestertes Fett (B) nach Anspruch 10, in welchem das Fettgemisch (C) aus 30-75% hydrierten Fischöl und 70-25% flüssigem Öl, vorzugsweise 30-70% hydriertem Fischöl und 70-30% flüssigem, Öl besteht.

12. Umgeestertes Fett (B) nach Anspruch 10 oder 11, das nicht fraktioniert ist.

13. Umgeestertes Fett (B) nach Anspruch 10 oder 11, das eine Oleinfraktion ist oder umfaßt.

14. Umgeestertes Fett (B) nach irgendeinem der Ansprüche 10 bis 13, in welchem das hydrierte Fischöl einen Steigschmelzpunkt von 48-59°C, insbesondere 51-59°C, aufweist.

15. Umgeestertes Fett (B) nach irgendeinem der Ansprüche 10 bis 14, in welchem das hydrierte Fischöl ein im wesentlichen vollständig hydriertes Fischöl ist.

16. Umgeestertes Fett (B) nach irgendeinem der Ansprüche 10 bis 15 mit einem N₂₀ von 18-50 und einem N₃₅ von 0-15.

17. Fettprodukt nach irgendeinem der Ansprüche 1 bis 9, in welchem das umgeesterte Fett (B) ein Fett (B) nach irgendeinem der Ansprüche 10 bis 16 ist.

## Revendications

1. Produit gras comestible contenant une phase grasse dont la matière grasse (A) a une teneur en résidus d'acide gras trans d'au plus 10 % et comprenant :
- de la matière grasse interestérifiée (B) dérivée d'un mélange de matière grasse (C) contenant de l'huile de poisson hydrogénée ayant un point de fusion d'au moins 45°C et de l'huile liquide, et
- de façon optionnelle, une autre matière grasse (D).

2. Produit gras selon la revendication 1, dans lequel la matière grasse (A) contient de 20 à 100 % de matière grasse interestérifiée (B) et de 0 à 80 % de l'autre matière grasse (D).

3. Produit gras selon la revendication 2, dans lequel la matière grasse (A) contient de 40 à 100 % de matière grasse interestérifiée (B) et de 0 à 60 % de l'autre matière grasse (D), de préférence de 60 à 100 % de la matière grasse interestérifiée (B) et de 0 à 40 % de l'autre matière grasse (D).

4. Produit gras selon l'une des revendications 1 à 3, contenant de 30 à 100 % de phase grasse et de façon optionnelle jusqu'à 70 % de phase aqueuse dispersée.

5. Produit gras selon la revendication 4, contenant de 40 à 100 % de phase grasse et de 0 à 60 % de phase aqueuse, de préférence de 60 à 100 % de phase grasse et de 0 à 40 % de phase aqueuse.

6. Produit gras selon l'une des revendications 1 à 5 dans lequel l'autre matière grasse (D) est composée d'huile liquide, d'huile de poisson partiellement hydrogénée, de matière grasse riche en résidus d'acide laurique, d'huile de palme, d'une fraction d'huile de palme ou d'un mélange de deux ou plus de ces produits.

7. Produit gras selon l'une des revendications 1 à 6 dans lequel la teneur en C₁₂, C₁₄, C₁₆ et en résidus d'acide gras trans est inférieure à 50 %, de préférence inférieure à 40 % par rapport à la matière grasse (A).

8. Produit gras selon l'une des revendications 1 à 7, dans lequel la teneur en résidus d'acide gras trans est inférieure à 7 % par rapport à la matière grasse (A).

9. Produit gras selon l'une des revendications 1 à 8 dans lequel la matière grasse (A) a une valeur N₂₀ d'au moins 8, de préférence de 11 à 50 et de façon plus préférentielle de 15 à 40.

10. Matière grasse interestérifiée (B) appropriée pour être utilisée dans un produit gras selon l'une des revendications 1 à 9, ayant une teneur en résidus d'acide gras trans d'au plus 15 %, de préférence de 0 à 10 %, de façon plus préférentielle de 0 à 5 % et qui est dérivé d'un mélange de matière grasse (C) comprenant 20 à 80 % d'huile de poisson hydrogénée ayant un point de fusion d'au moins 45°C, 80 à 10 % d'huile liquide et de façon optionnelle jusqu'à 40 %, de préférence de 0 à 30 % de matière grasse riche en résidus d'acide laurique.

11. Matière grasse interestérifiée (B) selon la revendication 10, dans laquelle le mélange de matière grasse (C) est composé de 30 à 75 % d'huile de poisson hydrogénée et de 70 à 25 % d'huile liquide, de préférence de 30 à 70 % d'huile de poisson hydrogénée et de 70 à 30 % d'huile liquide.

12. Matière grasse interestérifiée (B) selon la revendication 10 ou 11, qui n'est pas fractionnée.

13. Matière grasse interestérifiée (B) selon la revendication 10 ou 11 qui est ou qui comprend une fraction oléine.

14. Matière grasse interestérifiée (B) selon l'une des revendications 10 à 13 dans laquelle l'huile de poisson hydrogénée a un point de fusion de 48 - 59°C, de préférence de 51 - 59°C.

15. Matière grasse interestérifiée (B) selon l'une des revendications 10 à 14, dans laquelle l'huile de poisson hydrogénée est essentiellement de l'huile de poisson totalement hydrogénée.

16. Matière grasse interestérifiée (B) selon l'une des revendications 10 à 15 ayant une valeur N₂₀ de 18 - 50 et une valeur N₃₅ de 0 - 15.

17. Produit gras selon l'une des revendications 1 à 9 dans lequel la matière grasse interestérifiée (B) est une matière grasse (B) selon l'une des revendications 10 à 16.
